# EUROPEAN PATENT APPLICATION

(11) **EP 2 072 213 A1**
(43) Date of publication of application: **24.06.2009**
(21) Application number: 08253917.2
(22) Date of filing: 08.12.2008
(51) Int. Cl.: B29C 45/14

(54) **Multi-layered molded article with decorative layer and method**

(30) Priority: 11.12.2007 CN 200710202966
(71) Applicant: FIH (Hong Kong) Limited, Hong Kong (HK)
(72) Inventor: Wu, Kun-Tsan, Shindian City, Taiwan 231 (TW); Tien, Li-Wen, Shindian City, Taiwan 231 (TW)
(74) Representative: Craven, Ian

(57) **Abstract**

A multi-layered molded article includes a decorative layer (12) and a substrate (14). The base is moldingly bonded to the decorative layer. The molten material may interlock with a plurality of tiny pores and protrusions formed on a bonding surface of the decorative layer. Therefore, the bonding effect between the decorative layer and the base is improved.

## Description

### 1. Field of the Invention

The present invention relates to multi-layer molded articles.

### 2. Description of related art

Molded articles, such as molded shells, are widely used in many technological fields. One example is a molded shell used with a portable electronic device (e.g., a mobile phone) for protecting internal electronic components. Another example is a molded shell used with furniture (e.g., a mini sofa) to provide decoration.

The molded shells may include a plastic substrate having some kind of decorative and/or protective (hereinafter "second") layer formed thereon. The molded shell may be made using an insert molding process. The second layer is placed in the mold cavity and then bonds to the molten plastic injected into the mold for forming the substrate.

Various difficulties may be faced when manufacturing this multi-layer molded article.

Therefore, there is room for improvement within the art.

### BRIEF DESCRIPTION OF THE DRAWINGS

FIG. 1 shows an exploded, schematic view of an exemplary embodiment of the present multi-layered molded article;

FIG. 2 shows a schematic view of the soft layer bonded to a female mold;

FIG. 3 shows a schematic view of a male mold closed relative to the female mold of FIG. 2; and

FIG. 4 shows a schematic view of the multi-layered molded article after molten material is injected into a mold cavity.

### DETAILED DESCRIPTION OF THE EXEMPLARY EMBODIMENTS

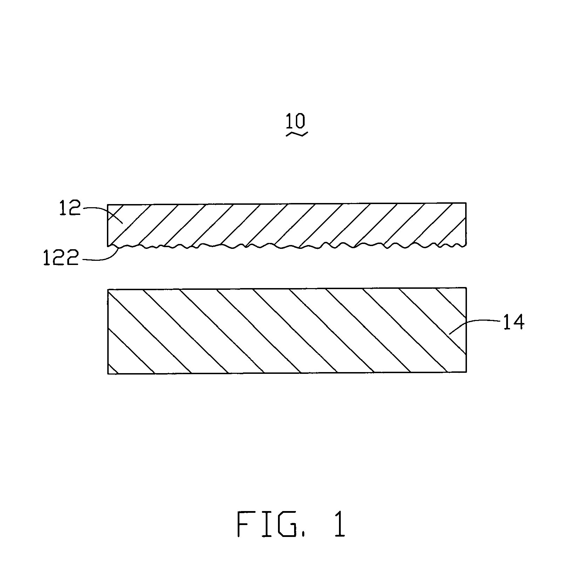

FIG. 1 shows the present multi-layered molded article 10, which in one exemplary embodiment includes a decorative layer 12 and a substrate 14.

The decorative layer 12 can be made of a material that is soft relative to the substrate 14. Exemplary soft materials include leather (natural and artificial), all types of fabrics, woven clothes, textiles, and nylon. One surface of the decorative layer 12 acts as a bonding surface 122. The bonding surface 122 should have a rough or coarse surface, formed by, for example, a plurality of tiny pores or projections (schematically shown). For some soft materials, the pores and projections of the bonding surface 122 may be a natural property of the material. For other soft materials, the pores and projections may be formed by grinding or sandblasting the bonding surface 122. The molten material used to make substrate 14 may penetrate in the tiny pores or the projections of the bonding surface 122 so that the tiny pores and projections interlock with the molten material, thereby increasing the bonding of the decorative layer 12 to the substrate 10.

The substrate 14 can be formed by injection molding a moldable material. The moldable material can be any of plastic, rubber, and silicone. The plastic material can be any of polyvinylchloride resin (PVC), polyethylene terephthalate (PET), acrylonitrile-butadiene-styrene (ABS), polycarbonate (PC), polyimide (PI), liquid crystal polymer (LCP), polyetherimide (PEI), polyphenylene sulfide (PPS), polystyrene (PS), polypropylene (PP). In particular, ABS and PC exhibit good adhesion to many softer materials.

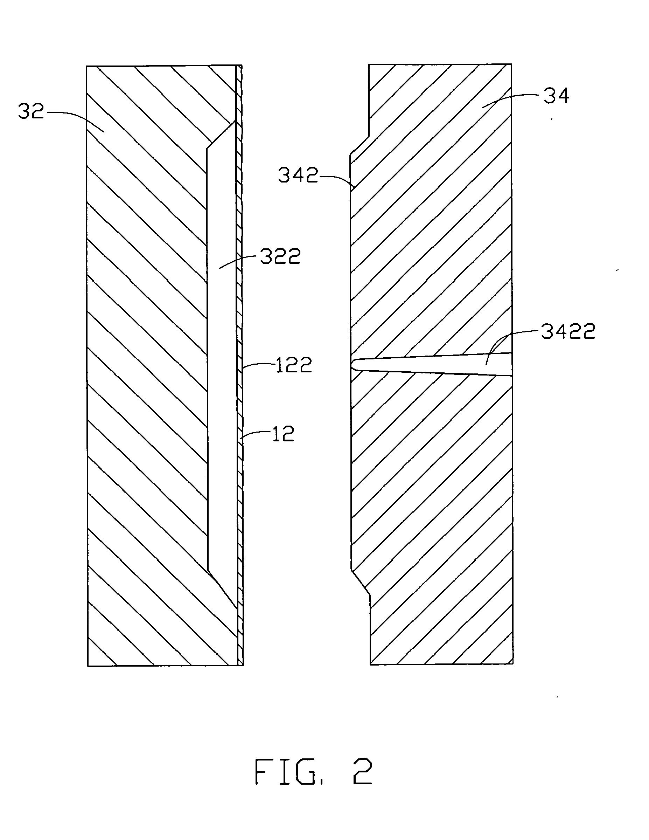

FIGS 2-4 depict various steps in the method of making multi-layer molded article 10. Referring to FIG. 2, an injection mold is provided. The injection mold includes corresponding male 34 and female 32 mold portions. The female mold portion 32 defines a recess 322. The male mold portion 34 has a protrusion 342. A central area of the male mold 34 defines runner 3422.

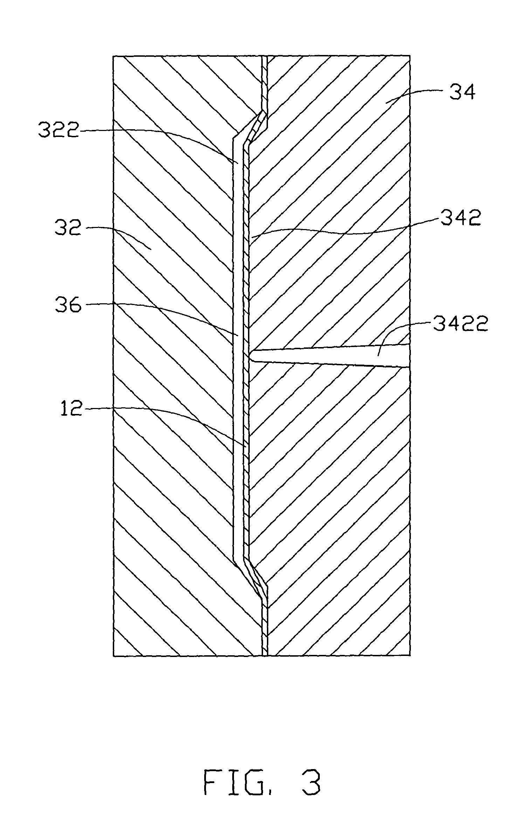

After securing the decorative layer 12 on one side of the female mold portion 32, the bonding surface 122, with its tiny pores and projections, faces the male mold portion 34. Referring to FIG. 3, mating the female mold portion 32 with the male mold portion 34 defines a mold cavity 36. Concurrently, the decorative layer 12 is pushed in the mold cavity 322, and contacts one side of the male mold portion 34.

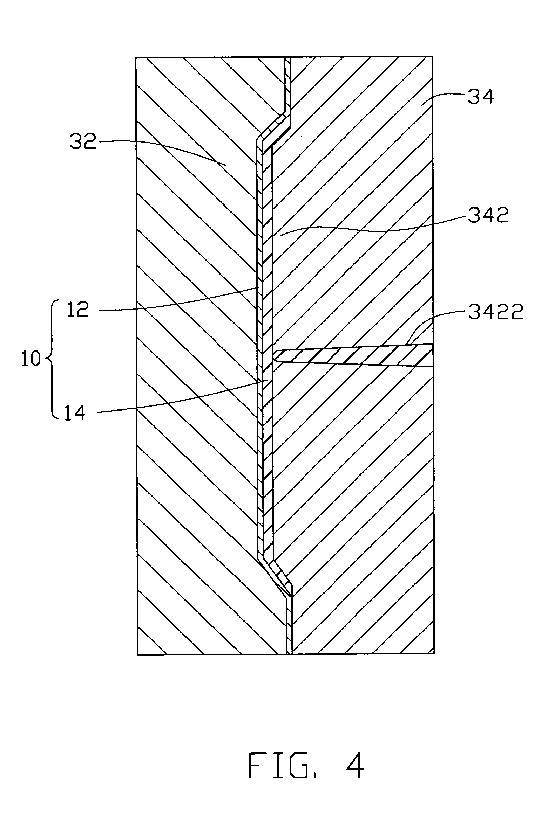

Referring to FIG. 4, molten material is injected into the mold cavity 36 through the runner 3422. The molten material pushes the decorative layer 12 toward the female mold portion 32. After filling the mold cavity 36 with molten material, the decorative layer 12 contacts the female mold portion 32 and the molten material may interlock with, or penetrate, the tiny pores or the projections may embed themselves in the molten material. Therefore, the decorative layer 12 and the substrate 14 form an integral multi-layered molded article 10 with an improved bonding effect between the decorative layer and the base.

After the molten material cools, the male mold portion 34 is opened, and the multi-layered molded article 10 taken out. This completes the manufacturing of the multi-layered molded article 10.

It is believed that the present embodiments and their advantages will be understood from the foregoing description, and it will be apparent that various changes may be made thereto without departing from the spirit and scope of the invention or sacrificing all of its material advantages, the examples hereinbefore described merely being preferred or exemplary embodiments of the invention.

## Claims

1. A multi-layered molded article comprising a decorative layer and a substrate, the substrate moldingly bonded to the decorative layer, and the decorative layer comprising a material softer than the substrate.

2. The multi-layered molded article as claimed in claim 1, wherein the substrate is made of one of plastic, rubber or silicone.

3. The multi-layered molded article as claimed in claim 1, wherein the decorative layer has a bonding surface having a plurality of tiny pores or protrusions formed thereon, the substrate being bonded to the bonding surface of the decorative layer.

4. The multi-layered molded article as claimed in claim 1, wherein the decorative layer is made of one of leather, fabric, woven clothes, textiles, and nylon.

5. A multi-layered molded article comprising a decorative layer and a substrate, wherein the substrate is moldingly bonded to the decorative layer, and the decorative layer made from a softer material than the substrate.

6. The multi-layered molded article as claimed in claim 5, wherein the softer material is one of leather, fabric, woven clothes, textiles, and nylon.

7. A method of forming a multi-layered molded article, comprising:
providing a decorative layer comprising a soft material;
fitting the decorative layer into a mold, the mold including a mold cavity;
injecting a molten material into the mold cavity to form a substrate, the decorative layer moldingly bonded to the substrate.

8. The method of forming a multi-layered molded article according to claim 7, wherein the soft material of the decorative layer is made of one of leather, fabric, woven clothes, textiles, and nylon.

9. The method of forming a multi-layered molded article according to claim 7, wherein the molten material is made of one of plastic, rubber and silicone.

10. The method of forming a multi-layered molded article according to claim 7, wherein the decorative layer has a bonding surface having a plurality of tiny pores or protrusions formed thereon, the substrate being bonded to the bonding surface of the decorative layer.
